# EUROPÄISCHE PATENTANMELDUNG

(11) **EP 2 014 352 A2**
(43) Veröffentlichungstag der Anmeldung: **14.01.2009**
(21) Anmeldenummer: 08016356.1
(22) Anmeldetag: 16.01.2007
(51) Int. Cl.: B01F 13/10, B01F 7/26, B01F 15/04, B01F 15/02, B01F 15/06, B05D 7/14, C09D 5/10, C09D 5/08

(54) **Vorrichtung zum Mischen und Dosieren von festen und flüssigen Komponenten eines Korrosionsmittels, Verfahren zum Herstellen eines Beschichtungsmittels und Applikationsanordnung**

(30) Priorität: 18.01.2006 DE 102006002545
(62) Teilanmeldung aus: 07711348.8
(71) Anmelder: EWALD DÖRKEN AG, 58313 Herdecke (DE)
(72) Erfinder: Kruse, Thomas, 44229 Dortmund (DE); Reusmann, Gerhard, 45259 Essen (DE); Rabe, Christian, 58640 Iserlohn (DE); Werner, Bettina, 58300 Wetter (DE); Lewoldsen, Holger, 58313 Herdecke (DE)
(74) Vertreter: Wenzel & Kalkoff

(57) **Zusammenfassung**

Bei einem Korrosionsschutzmittel mit einer ersten Komponente, aufweisen Zinkstaub und mit einer zweiten Komponente, mit einem anorganischen Bindemittel und einem VOC-freien oder VOC-konformen Lösungsmittel, weist das Bindemittel, um metallische Werkstücke bei gleichbleibender Qualität sicher und energiesparend beschichten zu können, Siliziumdioxid und Alkalisilikat in einem Mol-Verhältnis von mindestens 4:1 auf. Eine Vorrichtung zum Mischen und Dosieren von festen und flüssigen Komponenten eines Korrosionsschutzmittels weist Mittel (11) zum Abmessen der Mengen der jeweiligen Komponenten des Korrosionsschutzmittels, einen Ansatzbehälter (1) und eine Mischvorrichtung (2) auf. Eine Applikationsanordnung zum Aufbringen von Korrosionsschutzmittel auf ein Werkstück weist einen Ansatzbehälter, Fördermittel, mindestens einen mit dem Ansatzbehälter verbundenen Druckminderer und mindestens eine mit dem Ansatzbehälter verbundene Sprühvorrichtung auf.

## Beschreibung

Die Erfindung betrifft ein Korrosionsschutzmittel mit siliziumbasiertem Bindemittel, ein Verfahren zur Herstellung und zum Anwenden des Korrosionsschutzmittels sowie Vorrichtungen zum Herstellen und Applizieren des Korrosionsschutzmittels.

Korrosionsschutzmittel auf der Grundlage von Zinkstaub und silikatischen Bindemitteln sind seit langem bekannt. Sie werden als sogenannte Zinkstaub-Farben entweder in Form von Anstrichen aufgetragen oder als erste, einfache Korrosionsschutzbeschichtung, als sogenannte Primer, auf metallische Rohstoffe bzw. Halbwaren wie Bänder, Bleche und dergleichen aufgebracht.

In beiden Ausführungen wird Zink als Mittel zum kathodischen Korrosionsschutz genutzt. Allerdings ist die Herstellung, Lagerung und Verarbeitung von Zinkstaub-Farben nicht einfach: Zink neigt äußerst schnell zum Absetzen und Aushärten, insbesondere in Gegenwart von Wasser. Dies macht sich in den von Anwendern besonders geschätzten Ein-Komponenten-Produkten besonders nachteilig bemerkbar. Ein-Komponenten-Produkte weisen daher in der Regel organische Lösungsmittel auf, um die Lagerfähigkeit der Zinkstaub-Farbe zu gewährleisten( DE 25 15 305; CH 503 093). Bei Primern wird das Problem der mangelhaften Lagerfähigkeit oft auch dadurch umgangen, dass der Anteil an Zink -und damit die Korrosionsschutzwirkung- stark reduziert wird (US 6,468,336).

Anstriche auf der Basis von Zinkstaub-Farben werden in hoher Schichtdicke aufgetragen. Diese Schichtdicke ergibt sich zum einen aus der Zusammensetzung der Farben, zum anderen ist die Schichtdicke wesentlicher Bestandteil des Schutzmechanismus, der dem Korrosionsschutz zugrunde liegt. Da bei Zinkstaub-Farben ein gewisses Risiko der Rißbildung über längere Zeit nicht völlig auszuschließen ist, wird u.a. versucht, den Nachteilen der Rißbildung durch große Schichtdicke zu begegnen. Da die Zinkstaub-Farben üblicherweise auf Konstruktionen im Außenbereich (Geländer, Gerüste, Brücken, Treppen, Schiffen und dergleichen) eingesetzt werden, kommt es hier auf Anforderungen an die Schichtdicke nicht an. Typisch für diesen Ansatz beschreibt z. B. die US 4,162,169 ein Bindemittel, das zur Herstellung von Zinkstaub-Farben geeignet ist. Beschrieben wird der Einsatz von Zinkstaub-Farbe, die mit einem dichten Überzug (Topcoat) versehen ist. Das in der US 4,162,169 vorgeschlagene Bindemittel enthält ein Silan, das beim Abbinden Methanol freisetzt. Es ist damit für Anwendungen geeignet, die im Freien, jedenfalls entfernt von Maschinen oder Produktionsanlagen stattfinden. Bei Einsatz in industriellen Anlagen müssen sonst Gesundheitsrisiken für das Personal und ggf. das durch das Methanol verursachte Explosionsrisiko beachtet werden.

Alternativ werden Zwei-Komponenten-Produkte angeboten, die vor Ort unmittelbar vor der Verwendung gebrauchsfertig gemischt werden. Zwei-Komponenten-Produkte sind insbesondere für gewerbliche Anwender geeignet, die größere Mengen von Zinkstaub-Farben einsetzen. Allerdings werden jeweils nur kleine Mengen von Zinkstaub-Farbe angerührt, die dann sofort verarbeitet werden müssen. Damit eignen sich Zinkstaub-Farben bisher nicht für Anwendungen, insbesondere industrielle Anwendungen, die eine kontinuierliche Verarbeitung von Zinkstaub-Farbe voraussetzen.

Diesen Weg geht die US 5,888,280, die eine Zwei-Komponenten-Rezeptur vorschlägt, bei der Zinkstaub, ein Metallsilikat der Gruppe IA und ein carbonathaltiger, interner Härter in wässriger Lösung vorliegen. Dieses Beschichtungsmittel ist nicht nur als Primer einsetzbar, es soll bei höherem Einsatz von Zinkpartikeln und reduziertem Wasseranteil auch als vollwertiger Korrosionsschutz geeignet sein. Durch Freisetzen von CO₂ soll der interne Härter den pH-Wert des Beschichtungsmittels herabsetzen und das Aushärten beschleunigen.

Weiter wird daran gearbeitet, die Korrosionsschutz-Wirkung von Zinkstaub-Farben zu verbessern, unter anderem, indem der Einsatz von leitfähigen Substanzen wie u.a. Eisenphosphid oder Eisenoxid-Verbindungen in Verbindung mit Zinkstaub-Farben vorgeschlagen wird. Ein typisches Beispiel für diese Entwicklung ist in der US 6,468,336 dargestellt.

Es ist Aufgabe der Erfindung, ein Korrosionsschutzmittel vorzuschlagen, mit dem metallische Werkstücke bei gleichbleibender Qualität, kontinuierlich, sicher und energiesparend beschichtet werden können. Die Erfindung zielt dabei insbesondere auf den Einsatz von Bindemitteln ab, die bei der Verarbeitung der Zinkstaub-Farbe möglichst wenig oder keine organischen Komponenten (VOC: volatile organic components) freisetzen. Die Voraussetzung für VOC-freie und VOC-konforme Beschichtungsmittel, auf die sich auch die vorliegende Erfindung bezieht, sind definiert in der 31. BIMSCHV (Bundes-Immisionschutz-Verordnung) vom 21. August 2001(BGBl. I, Nr. 44 v. 24. Aug. 2001, S. 2180).

Diese Aufgabe wird gelöst mit einem Korrosionsschutzmittel nach Anspruch 1, einem Verfahren zum Beschichten von Werkstücken gemäß Anspruch 19, einem Werkstück mit Korrosionsschutzmittel nach Anspruch 26, einem Verfahren zum Herstellen eines Korrosionschutzmittels nach Anspruch 30, einer Vorrichtung zum Herstellen eines Korrosionsschutzmittels nach Anspruch 38 und eine Applikationsanordnung nach Anspruch 46.

Erfindungsgemäß weist das Korrosionsschutzmittel zwei Komponenten auf. Eine erste Komponente besteht im Wesentlichen aus Zinkstaub, ggf. mit einem Anti-Absetzmittel versetzt. Der Gewichtsanteil der ersten Komponente liegt - bezogen auf die Gesamtrezeptur- bei mindestens 40 Gewichts-%, vorzugsweise bei mindestens 60 Gewichts-%, besonders bevorzugt bei mindestens 80 Gewichts-% bis maximal 97 Gewichts-%. Der hohe Gehalt an Zinkstaub gewährleistet einen bisher für Zinkstaub-Beschichtungen nicht gekannten Korrosionsschutz.

Die Zinkstaub-Partikel weisen einen durchschnittlichen Partikel-Durchmesser von bis zu 10 µm, bevorzugt von bis zu 8 µm auf. Bei dieser Partikelgröße ist für die mit diesem Partikeln aufzubauenden Trockenfilm-Stärken das Verhältnis von Durchmesser und spezifischer Oberfläche der Partikel optimal.

Falls erforderlich, sind dem Zinkstaub Mittel zugesetzt, die ein unerwünschtes Kompaktieren des Zinkstaubs verhindern, sogenannte Anti-Absetzmittel. Besonders geeignet ist hier beispielsweise Zinkoxid oder amorphes SiO₂. Der Anteil an Anti-Absetzmittel kann in der ersten Komponente bis zu 15 Gewichts-% bezogen auf die Menge an Zinkstaub betragen, vorzugsweise bis zu 10 Gewichts-%, besonders bevorzugt bis zu 5 Gewichts-%. Der Einsatz von Zinkoxid hat sich überraschenderweise beim Sprühen des Korrosionsschutzmittels als besonders vorteilhaft herausgestellt, weil Zinkoxid zu einem verbesserten Sprühverhalten beiträgt. Die Düsen der Sprühvorrichtung neigen bei Einsatz von Zinkoxid weitaus seltener zum Zusetzen. In den Angaben für das Zinkoxid ist berücksichtigt, dass der Zinkstaub herstellungsbedingt 1 bis 3 Gewichts-% Zinkoxid enthält.

Eine zweite Komponente ist aus einem anorganischen, silziumbasierten Bindemittel, einem VOC-freien oder VOC-konformen Lösungsmittel und ggf. Partikeln zusammengesetzt, die zur Verbesserung des Korrosionsschutzes beitragen. Insbesondere Alkalimetallsilikate versetzt mit Siliziumdioxid, haben sich als geeignet erwiesen. Bevorzugt wird ein Bindemittel, bei dem der Anteil von Siliziumdioxids größer ist als der Anteil des Alkalioxids (Das Alkalisilikat wird hier auf der Basis von Alkalioxid berechnet). Das Verhältnis von SiO₂ zu Alkalioxid beträgt mindestens 4:1, vorzugsweise mindestens 5:1, bevorzugt mindestens 6:1.

Zur Anpassung an verschiedene Anwendungszwecke oder Verarbeitungsbedingungen können auch Mischungen von Alkalimetallsilikaten eingesetzt werden, beispielsweise eine Mischung aus Natrium- und Kaliumsilikaten, alternativ auch Lithiumsilikaten.

Je nach den Erfordernissen des Anwendungsfalls können dem Bindemittel Co-Bindemittel zugesetzt sein. Dabei handelt es sich vorzugsweise um polymere Bindemittel, beispielsweise Methylsilikonharz oder verseifungsfreie Acrylate. Solche Bindemittel können zum Einstellen der Härte oder der Elastizität des Bindemittels dienen.

Der Anteil des Bindemittels an der zweiten Komponente beträgt mindestens 3 Gewichts-% bis maximal 40 Gewichts-%, bevorzugt 10 Gewichts-% bis 20 Gewichts-%.

Als VOC-freie oder VOC-konforme Lösungsmittel können sowohl Wasser, hochsiedende Lösungsmittel oder Mischungen davon eingesetzt sein. VOC-konforme Lösungsmittel sind insbesondere solche Lösungsmitteln, deren Siedepunkt (über 250°C) so hoch ist, dass sie bei der Verarbeitung keine organischen Substanzen freisetzen. Aus Gründen der Arbeitssicherheit wird bevorzugt, wenn Wasser als Lösungsmittel eingesetzt ist. Wasser gewährleistet zudem, dass das Korrosionsschutzmittel VOC-frei ist.

Für das Korrosionsschutzmittel sind übliche, bekannte Pigmente einsetzbar. In der praktischen Anwendung wird jedoch oft angestrebt, ein gleichmäßiges, hochwertiges metallisches Aussehen der beschichteten Werkstücke zu erreichen. Daher werden dem Korrosionsschutzmittel meist metallische Partikel zugesetzt. Besonders geeignet sind solche aus passiviertem Aluminium, die allein zur optischen Gestaltung der Oberfläche eingesetzt werden. Aluminium kann in verschiedenen Formen eingesetzt werden. Bevorzugt ist der Einsatz von passivierten Aluminium-Flakes als Feststoff, der ggf. in die zweite Komponente eingebracht ist. Je nach den Anforderungen an das jeweilige Korrosionsschutzmittel können die Partikel zur Verbesserung des Korrosionsschutzes auch als dritte Komponente gelagert werden, die bei der Herstellung des Korrosionsschutzmittels mit der ersten und der zweiten Komponente zusammengeführt wird, so z. B. dann, wenn die Aluminiumpartikel als wässrige Paste vorliegen.

Die Pigmente werden der zweiten Komponente des Korrosionsschutzmittels in einer Menge von mindestens 5 Gewichts-% bezogen auf die Gesamtmenge der zweiten Komponente zugesetzt. Bevorzugt werden mindestens 10 Gewichts-% bis mindestens 15 Gewichts-%, besonders bevorzugt bis 20 Gewichts-% Pigmente zugesetzt.

Dem Korrosionsschutzmittel können -entweder in der ersten Komponente oder in der zweiten Komponente- weitere Zusätze beigefügt sein, um das Korrosionsschutzmittel an die Verarbeitungsbedingungen anzupassen oder um vorgegebene Gebrauchseigenschaften zu gewährleisten. Hier sind insbesondere Mittel zum Einstellen der Gleiteigenschaften bzw. Schmiermittel zu nennen. Sie werden vorzugsweise der zweiten Komponente zugesetzt, können aber auch in der ersten Komponente enthalten sein.

Dem erfindungsgemäßen Beschichtungsmittel können als Additive auch feste oder flüssige Wachse als Emulsion oder Dispersion zugesetzt sein, um beispielsweise die Gleiteigenschaften der Beschichtung einzustellen. Es können übliche und bekannte Wachse eingesetzt sein, z. B. Wachse auf Basis von Polyethylen oder Polypropylen, Polytetrafluorethylen, aber auch natürliche Wachse wie Carnaubawachs oder Mischungen der vorgenannten Substanzen. Auch andere, die Schmier- und Gleiteigenschaften beeinflussende Substanzen wie Graphit, Molybdändisulfid oder Bornitrid können als Additive eingesetzt sein. Übliche Einsatzmengen für Schmier- oder Gleitmittel betragen bis zu 20 Gewichts-%, vorzugsweise bis zu 5 Gewichts-%, vorteilhaft bis zu 3 Gewichts-% bezogen auf die Gesamtrezeptur des Korrosionsschutzmittels.

Das Beschichtungsmittel kann neben dem erfindungsgemäßen Bindemittel weiterhin Additive enthalten, die die Untergrundbenetzung, die Entschäumung, das Fließverhalten, die Entlüftung oder die Pigmentbenetzung beeinflussen, aber auch Mittel zur Flexibilisierung oder Katalysatoren können enthalten sein. Diese Additive können jeweils in Anteilen von 0,01 bis 8 Gewichts-% bezogen auf die Gesamtformulierung des Beschichtungsmittels zugesetzt sein.

Im Rahmen der Erfindung können der zweiten Komponente beispielsweise mit gutem Effekt in Wasser dispergierbare oder mischbare Korrosionsinhibitoren zugesetzt sein, vorzugsweise stickstoffhaltige Verbindungen, insbesondere quarternäre Ammoniumsalze. Ein weiter bevorzugter Zusatz zu dem Beschichtungsmittel sind Borverbindungen, insbesondere aus der Gruppe der Borsäuren oder Boroxide, aber auch Molybdänverbindungen oder Verbindungen, die Phosphor enthalten. Diese Korrosionsinhibitoren werden in Mengen von 0,01 Gewichts-% bis 30 Gewichts-% bezogen auf die Gesamtformulierung zugesetzt, wobei die Untergrenze durch das Erreichen einer gewünschten Wirkung gegeben ist, während die Obergrenze aus Kostengründen gesetzt ist.

Das erfindungsgemäße Korrosionsschutzmittel weist einen pH-Wert zwischen 6 und 12, bevorzugt zwischen 8 und 12 auf. Schon die alkalische Einstellung des Korrosionsschutzmittels trägt zur Schutzwirkung des Basecoats auf dem Werkstück bei, da sich in Gegenwart von Wasser ein basisches Milieu einstellt, dass einer Korrosion entgegenwirkt. Als besonderer Vorteil ist zudem herauszustellen, dass ein Korrosionsschutzmittel mit einem pH-Wert von 10 -12 das in der Komponente I enthaltene Zink kaum passiviert (vgl. B. Roathali, G. Cox und W. Littreal, "Metalls & Alloys", 3.73, 1963), so dass ein Maximum an kathodisch wirksamen Zinkpartikeln in der Beschichtung enthalten ist.

Das erfindungsgemäße Korrosionsschutzmittel gewährleistet einen gegenüber bekannten Zinkstaub-Farben außerordentlich effizienten und langandauernden Rostschutz. Eine Beschichtung in einer Trockenschicht-Dicke von 10 µm gewährleistet eine Standzeit im Salzsprühtest nach DIN 50 0 21 von mindestens 200 Stunden, bei doppelter Beschichtungsdicke der Trockenschicht beträgt die Standzeit mindestens 500 Stunden. Der erreichbare Korrosionsschutz geht damit weit über die bisher erreichten Werte hinaus. Damit erweitert sich der Anwendungsbereich für das erfindungsgemäße Korrosionsschutzmittel über den Einsatz als einfaches Anstrichmittel. Das erfindungsgemäße Korrosionsschutzmittel kann mit verschiedensten Auftragsverfahren auf die zu beschichtenden Metalloberflächen aufgebracht werden. Aufgrund der hohen Wirksamkeit auch bei sehr geringen Schichtdicken ist das Mittel sehr sparsam und wirtschaftlich.

Nach einer besonders bevorzugten Ausführungsform ist das erfindungsgemäße Korrosionsschutzmittel geeignet, mit einer weiteren Schicht, insbesondere einer farbgebenden Beschichtung überzogen zu werden. Eine solche Beschichtung, die auf dem erfindungsgemäßen Korrosionsschutzmittel haftet, ohne dessen Eigenschaften zu beeinträchtigen, ein sogenannter Topcoat, ist beispielsweise zusammengesetzt aus demselben Bindemittel, das in der zweiten Komponente des Korrosionsschutzmittels enthalten ist. Auch hier kann das Bindemittel ergänzt sein um ein Co-Bindemittel, vorzugsweise ein polymeres Co-Bindemittel, besonders ein Methylsilikonharz oder ein verseifungsfreies Acrylat.

Nach einer weiter bevorzugten Ausführung ist dieser Topcoat mit farbgebenden Pigmenten, zum Beispiel mit Aluminiumpigmenten, Ruß oder Eisenpigmenten versehen. Der Topcoat kann VOC-konform sein, also beschränkte Mengen organischer Substanzen enthalten, die beim Verarbeiten oder Aushärten des Topcoats freigesetzt werden. Bevorzugt ist der Topcoat jedoch ebenfalls VOC-frei.

Damit auch empfindliche Werkstoffe beschichtet werden können, sind das Korrosionsschutzmittel und ggf. der Topcoat vorteilhaft so eingestellt, dass das Trocknen bzw. Aushärten bei Temperaturen von bis zu 120°C erfolgt, bevorzugt bis zu 80°C, besonders bevorzugt bis zu 40 °C.

Gegenstand der Erfindung ist weiter ein Verfahren zum Aufbringen einer korrosionsschützenden Beschichtung auf ein metallisches Werkstück. Dieses Verfahren wird als eigenständiger erfinderischer Beitrag zur Erfindung angesehen.

Das erfindungsgemäße Verfahren zum Beschichten von metallischen Werkstücken sieht vor, die Oberfläche des metallischen Werkstücks ggf. zu reinigen, dann mit einem VOC-freien (bevorzugt) oder einem VOC-konformen Primer zu beschichten, das Werkstück dann nach dem Trocknen des Primers mit einem Korrosionsschutzmittel nach mindestens einem der Ansprüche 1 bis 10 zu beschichten und abschließend das Korrosionsschutzmittel zu trocknen.

Das Auftragen des Primers, der im einfachsten Fall aus einer Wasserglas-Lösung oder einem Co-Binder besteht, wie er für das Korrosionsschutzmittel beschrieben ist, verbessert die Haftung des Korrosionsschutzmittels auf dem Werkstück und gewährleistet damit einen langdauernden Korrosionsschutz des Werkstücks.

Die Reinigung des Werkstücks wird in der Regel erforderlich sein, weil Rückstände aus vorangehenden Bearbeitungsschritten die Haftung der Korrosionsschutz-Beschichtung hindern. Grundsätzlich ist jede Form von Oberflächen-Reinigung geeignet, einen Untergrund für die erfindungsgemäße Beschichtung zu schaffen. Wichtig ist aber, dass auch schonende Reinigungsverfahren wie sie z. B. für die Vorbereitung empfindlicher Werkstoffe erforderlich sind, ebenfalls einen geeigneten Untergrund für die vorerwähnte Beschichtung mit Korrosionsschutzmitteln bieten. Insbesondere die Reinigung temperatur- und /oder säureempfindlicher Werkstoffe wie z. B. Spezialstähle mittels Bürsten, Ultraschall, Laugen- und/oder Lösemittelbad oder Dampfreinigung oder einer Folge oder Kombination dieser Reinigungsschritte schafft Oberflächen, die zur Beschichtung bestens geeignet sind.

Auf die so gereinigte Oberfläche des Werkstücks wird jetzt mindestens abschnittsweise ein Primer aufgebracht. Zahlreiche Primer sind geeignet, beispielsweise Co-Binder, die mit dem Bindemittel des Korrosionsschutzmittels oder des Topcoats einsetzbar sind.

Bevorzugt handelt es sich bei dem Primer um eine VOC-freie Lösung, z. B. eine 4-%ige Wasserglas-Lösung, ggf. mit Additiven, die unproblematisch zu verarbeiten ist. Der Primer kann im einfachsten Fall ohne weitere Additive aufgetragen werden, üblicherweise ist er aber mit weiteren Additiven, z. B. mit Benetzungsmitteln und ggf. Korrosionsinhibitoren versetzt. Bevorzugt werden bis zu 5 Gewichts-% Benetzungsmittel und/oder Korrosionsschutzmittel eingesetzt, vorteilhaft bis zu 0,05 Gewichts-%. Diese Beschichtung wird anschließend getrocknet. Die Trocknung erfolgt mittels Lufttrocknung bevorzugt zwischen Raumtemperatur und 100 °C, also besonders einfach und preiswert. Die Schichtdicke des getrockneten Primers beträgt zwischen 100 nm und 3 µm.

Auf den getrockneten Primer wird erfindungsgemäß mindestens abschnittsweise eine Schicht des vorstehend beschriebenen Korrosionsschutzmittels aufgetragen. Das Korrosionsschutzmittel kann mit beliebigen Auftragsverfahren, insbesondere Sprühen, Walzen, Gießen, Streichen, Rakeln, Rollen, Tauch-Schleudern oder Tauch-Ziehen aufgebracht werden. Die Beschichtung mit dem Korrosionsschutzmittel erfolgt zweckmäßig unmittelbar, spätestens aber bis zu 4 Stunden nach dem Trocknen des Primers, um einen optimalen, langfristig beständigen Korrosionsschutz zu gewährleisten. Das Korrosionsschutzmittel ist bei Raumtemperatur schnell berührungsfest, bereits nach ca. 30 bis 120 Sekunden ist es auf der Oberfläche des Werkstücks angetrocknet. Die eigentliche Aushärtezeit beträgt je nach Bindemittel und Schichtdicke sowie Anteil des Zinkstaubs zwischen 24 Stunden und 72 Stunden, im Extremfall kann die Aushärtezeit bis zu 14 Tagen betragen.

Die zur Trocknung erforderlichen Temperaturen liegen sowohl für den Primer als auch für das Korrosionsschutzmittel nicht über 120 °C, bevorzugt nicht über 80 °C, besonders bevorzugt nicht über 40 °C, vorteilhaft nicht über Raumtemperatur. Das Trocknen bzw. Aushärten kann sowohl für den Primer als auch für das Korrosionsschutzmittel mit Luft erfolgen. Bevorzugt wird mit stark erhöhter Luftgeschwindigkeit getrocknet, die z. B. in so genannten Seitenverdichtern erzeugt wird. Diese Form der Trocknung erfordert nur geringen Energieaufwand und verhältnismäßig geringen apparativen Aufwand.

Das nach dem vorstehend beschriebenen Verfahren beschichtete Werkstück ist langfristig gegen Korrosion geschützt, auch wenn es aggressiven Umweltbedingungen ausgesetzt ist. Beispielsweise eignet sich die oben beschriebene Beschichtung aus Primer und Korrosionsschutzmittel sehr gut, um Bremsscheiben zu beschichten, die eine Beständigkeit im Salzsprühtest von mehr als 500 Stunden aufweisen müssen. Bremsscheiben werden bisher mit bekannten Korrosionsschutzmitteln beschichten, die zum vollständigen Aushärten über längere Zeit auf Temperaturen über 300 °C erhitzt werden müssen. Dabei kommt es häufig zu einem Verformen der Bremsscheiben, was für diese Produkte nicht zulässig ist. Bekannte Beschichtungen führen daher zu einem verhältnismäßig hohen Ausschuss. Andere Bauteile sind z. B. aus einem temperaturempfindlichen Metall oder aus Guss hergestellt. Diese Werkstoffe ändern ihre Eigenschaften bei Erwärmung auf über 180 °C wesentlich. Damit scheiden konventionelle Beschichtungsverfahren für einen weiten Kreis von Korrosionsschutzmittel aus, die zum Aushärten der Beschichtung immerhin noch Temperaturen von über 160 °C, oft über 200 °C einsetzen. Auch hier eröffnet das erfindungsgemäße Korrosionsschutzmittel deutlich verbesserte Möglichkeiten für einen umfassenden kathodischen Korrosionsschutz.

Für das erfindungsgemäße Werkstück wird eine Trockenschicht-Dicke des Korrosionsschutzmittels nach dem Aushärten von 1 µm bis 100 µm, vorzugsweise von 15 µm bis 60 µm, besonders bevorzugt von 20 µm bis 40 µm angestrebt.

Das Korrosionsschutzmittel aus zwei, ggf. drei Komponenten kann auf besonders einfache Weise gebrauchsfertig hergerichtet werden. Aus dem Stand der Technik ist bekannt, dass Zinkstaub in das Bindemittel eingerührt wird. Dieses Beschichtungsmittel muss dann sofort verarbeitet werden. Aufgrund der außerordentlich kurzen Verarbeitungszeit (Topfzeit) wird bei bekannten Produkten stets batchweise gearbeitet.

Diese Form der Aufbereitung des Korrosionsschutzmittels ist für industrielle Verarbeitungsprozesse nicht geeignet. Eine besser an den kontinuierlichen Bedarf angepasste Versorgung mit dem erfindungsgemäßen Korrosionsschutzmittel ist jedoch bisher nicht verfügbar gewesen. Versuche haben gezeigt, dass eine quasi-kontinuierliche Herstellung des Korrosionsschutzmittels beim Anwender geeignet ist, einen kontinuierlichen Bedarf gut zu bedienen.

Aufgrund der oben genannten Aufgabe wird im Rahmen der erfindungsgemäßen Lösung als eigenständiger Bestandteil für das Herstellen von Beschichtungsmitteln mit festen und flüssigen Komponenten das nachfolgend erläuterte Verfahren bereitgestellt.

Hierbei wird zunächst eine Teilmenge der flüssigen Komponenten des Korrosionsschutzmittels für einen Ansatz des Beschichtungsmittels in einen Ansatzbehälter gegeben. Wie bereits eingangs erwähnt, kann es sich bei den flüssigen Komponenten bspw. um die flüssige Komponente des Beschichtungsmittels mit Bindemittel und weiteren Additiven wie Haftvermittler, Benetzungsmittel, Verdicker, Entschäumer, Entlüftungsmittel, Pigmentbenetzer, Korrosionsinhibitoren aber auch Mittel zur Flexibilisierung oder Katalysatoren handeln. Es kann aber auch ein geeignetes Lösungsmittel oder Wasser vorgelegt werden.

Anschließend wird die feste Komponente zugegeben und zur gleichmäßigen Durchmischung von fester und flüssiger Komponente eine Homogenisierungsphase durchgeführt.

Unter dem Begriff "feste Komponenten" sind im Rahmen der vorliegenden Erfindung insbesondere partikuläre Stoffe wie Metallpartikel/Flakes, trockene Pigmente und Füllmaterial verstanden. Auch pastöse Komponenten, also solche, die nicht oder nur sehr begrenzt fließfähig sind, sind im Zusammenhang der vorliegenden Erfindung als feste Komponenten verstanden.

Nach dem Homogenisieren des Ansatzes für das Beschichtungsmittel wird die Restmenge der flüssigen Komponente zugegeben und ggf. - je nach Viskosität der einzelnen Komponenten - mit dem Ansatz vermengt.

Nach einer besonders bevorzugten Ausführungsform erfolgt das Abmessen und Mischen der festen und flüssigen Komponenten durch eine automatische Steuerung. Diese Steuerung regelt nach einer vorteilhaften Weiterbildung auch die Einhaltung optimaler Verfahrensparameter, bspw. Temperatur, Druck, Mischdauer und Intensität des Mischens.

Der Vorteil des Verfahrens liegt insbesondere bei der Herstellung von Beschichtungsmittel mit hohem Anteil an festen Komponenten, wie z. B. bei dem Korrosionsschutzmittel gemäß der vorliegenden Erfindung. Das Verfahren erlaubt eine quasi-kontinuierliche Versorgung mit dem erfindungsgemäßen Korrosionsschutzmittel, bspw. innerhalb industrieller Verarbeitungsprozesse. Hierbei wird zwar ein Ansatz an Korrosionsschutzmittel in einem "Batch" hergestellt, durch die besondere, bevorzugt automatische Ausgestaltung des Verfahrens ist jedoch eine Versorgung mit Korrosionsschutzmittel in einem kontinuierlichen Industrieprozess, bspw. innerhalb einer Beschichtungsanlage einer Fertigungsstraße möglich. Es ist möglich, besonders gleichmäßige Ansätze mit außerordentlich hohen Anteilen der festen Komponente wirtschaftlich herzustellen, auch dann, wenn ausschließlich auf VOC-freie oder ggf. VOC-konforme Bestandteile zurückgegriffen wird.

Die Bestimmung der Teilmenge der flüssigen Komponenten, die zu Beginn des Verfahrens in den Behälter gegeben wird, ist grundsätzlich abhängig von dem Verhältnis der flüssigen zu den festen Komponenten und insbesondere der Viskosität der flüssigen Komponenten. Die Teilmenge sollte so gewählt werden, dass während der Homogenisierungsphase eine homogene Paste mittlerer bis hoher Viskosität erhalten wird, wodurch eine gute Vermengung durch Annäherung der Viskositäten der einzelnen Komponenten erreicht wird. Beim Herstellen des erfindungsgemäßen Korrosionsschutzmittels mit extrem hohem Anteil an Zinkstaub (z. B. über 90 Gewichts-%) und einem VOC-konformen Lösungsmittel, beträgt die Teilmenge bevorzugt ungefähr ein Drittel der gesamten Menge der flüssigen Komponenten. Hierbei wird neben einer sehr guten Homogenisierung auch ein Vereinzeln agglomerierter Zinkpartikel erreicht.

Je nach Beschaffenheit insbesondere der flüssigen Komponenten, wird bevorzugt während des Zugebens der festen Komponenten und/oder während der Homogenisierungsphase der Ansatz regelmäßig vermengt. Hierbei können grundsätzlich sämtliche geeigneten Vorrichtungen und Verfahren eingesetzt werden, wie zum Beispiel Vermengen durch Gasverwirbelung oder kontinuierliches bzw. regelmäßiges Umpumpen des Ansatzes. Insbesondere ist es bevorzugt, dass der Ansatz regelmäßig oder kontinuierlich verrührt wird. Hierbei können übliche Rührvorrichtungen, je nach Größe des Ansatzbehälters, wie bspw. Magnetrührer, Dissolverscheiben oder ein Ultraturrax eingesetzt werden. Um ein Absetzen der festen Komponenten im Beschichtungsmittel zu vermeiden ist es weiterhin bevorzugt, dass auch während des Zugebens der Restmenge der flüssigen Komponenten sowie einer etwaigen nachfolgenden Stand-/Rührzeit, der Ansatz regelmäßig vermengt wird.

Beim Verrühren des Ansatzes wird die Qualität des Mischvorgangs durch die Auswahl des Rührers und der Drehzahl bestimmt. Grundsätzlich sollte die Drehzahl daher anhand der Umfangsgeschwindigkeit in Abhängigkeit der zu homogenisierenden Mittel gewählt werden. Experimentelle Ergebnisse des Anmelders bestätigen z. B., dass eine Drehzahl zwischen 100 und 1500 U/min und bevorzugt 1000 U/min bei Verwendung einer Dissolverscheibe besonders vorteilhaft zur Herstellung eines Beschichtungsmittels ist. Insbesondere bevorzugt ist die Drehzahl regelbar, so daß bei den einzelnen Verfahrensschritten unterschiedliche Drehzahlen eingestellt werden können.

Bevorzugt wird die Temperatur des Beschichtungsmittel-Ansatzes während des Verfahrens zwischen 4°C und 40°C gehalten. Hierzu kann der Ansatzbehälter geeignet ausgebildet sein, bspw. mit üblichen Heiz-/Kühlvorrichtungen. Geeignet sind z. B. doppelwandige Ansatzbehälter, die von einem Heiz- oder Kühlmedium durchströmt werden. Je nach Bindemittelsystem kann es zweckmäßig sein, den Behälter während des Misch-und Dosierverfahrens mit einem festgelegten Über- oder Unterdruck zu beaufschlagen. Insbesondere kann bei Anlegen eines Vakuums z. B. eine Entschäumung und damit eine gute Homogenisierung des Beschichtungsmittels erreicht werden. Bevorzugt ist hierbei ein Unterdruck von ca. 1/2 bar unter Atmosphärendruck.

Nach einer Weiterbildung der Erfindung ist es bevorzugt, dass mit oder nach Zugabe der Restmenge der flüssigen Komponenten weitere feste und/oder flüssige Komponenten und insbesondere feste und/oder flüssige Zusatzstoffe zugegeben werden. Beispielsweise können Pigmente, insbesondere Metallpartikel und/oder Flakes, wie bspw. Aluminiumflakes in fester oder pastöser Form, aber auch Schmiermittel, Benetzungsmittel, Verdicker oder Haftvermittler so wie sie vorstehend im Zusammenhang mit der Zusammensetzung der Korrosionsschutzmittels beschrieben werden, zugegeben werden. Je nach Zusatzstoff sollte bevorzugt auch während der Zugabe von Zusatzstoffen und/oder auch danach der Beschichtungsmittelansatz weiter vermengt bzw. verrührt werden. Für ein Verrühren nach Komplettierung des Beschichtungsmittels wird bevorzugt eine Drehzahl im Bereich von bis zu 500 U/min verwendet.

Aufgrund der speziellen Rezeptur eines VOC-konformen Korrosionsschutzmittels und dem dadurch bedingten besonderen Herstellungsverfahren wird im Rahmen der erfindungsgemäßen Lösung als eigenständiger Bestandteil zum Herstellen des erfindungsgemäßen Korrosionsschutzmittels eine Vorrichtung zum Mischen und Dosieren von festen und flüssigen Komponenten des Korrosionsschutzmittels bereitgestellt. Diese Vorrichtung ist versehen mit Mitteln zum Abmessen der Mengen der jeweiligen Komponente des Korrosionsschutzmittels, einem Ansatzbehälter sowie einer Mischvorrichtung und ggf. Mitteln zum Steuern des Verfahrens. Unter Verwendung einer derartigen Vorrichtung ist die Durchführung des vorgenannten Verfahrens zur Herstellung des erfindungsgemäßen Korrosionsschutzmittels in vorteilhafter Weise leicht möglich.

Zum Abmessen der Mengen der jeweiligen Komponenten des Korrosionsschutzmittels sind grundsätzlich sämtliche übliche Vorrichtungen, wie Waagen, Pumpen oder Durchflussmesser geeignet. Beispielsweise können die festen Komponenten, wie Zinkstaub, unter Wiegen des Korrosionsschutzmittelansatzes dosiert beigegeben werden. Hierbei kann der Ansatzbehälter beispielsweise auf einer Waage angeordnet sein, um das Gewicht des Ansatzbehälters bestimmen zu können. Vor Zugabe der jeweiligen Menge wird das Gewicht des Ansatzbehälters bestimmt und die Differenz von dem jeweiligen Meßwert beim Zugeben der Komponente bestimmt. Bei flüssigen Komponenten können auch bspw. getaktete Pumpen oder Durchflussmesser/Sensoren zum Abmessen der Mengen vorteilhaft sein. Auch bei flüssigen Komponenten kann eine Waage eingesetzt sein. Die Meßunsicherheit sollte maximal 2%, bevorzugt 1% nicht überschreiten, um die Rezeptur des erfindungsgemäßen Korrosionsschutzmittels einhalten zu können. Die Auswahl der jeweiligen Vorrichtungen zum Abmessen richtet sich nach den jeweiligen Bedingungen des zu messenden Substrats.

Die Vorrichtung zum Mischen des Korrosionsschutzmittels weist ferner einen Ansatzbehälter zur Aufnahme des Korrosionsschutzmittelansatzes sowie eine Mischvorrichtung auf. Der Ansatzbehälter sollte hierbei nach Möglichkeit leicht austauschbar sein, um in einer industriellen Fertigung im quasi-kontinuierlichen Betrieb eingesetzt werden zu können. Es ist hierbei vorteilhaft möglich, den Ansatzbehälter nach Herstellung des Korrosionsschutzmittels direkt in einer Applikations-/Beschichtungsanordnung zu verwenden.

Nach einer Weiterbildung der Erfindung ist der Ansatzbehälter ein Druckgefäß. Je nach Applikationsvorrichtung oder bei Verwendung von flüchtigen Komponenten innerhalb des Korrosionsschutzmittels ist ein Druckgefäß vorteilhaft. Bevorzugt weist die Vorrichtung Mittel zum konstant halten der Behältertemperatur des Ansatzbehälters auf. Hierdurch kann auch bei exotherm reagierenden Lösemittel- oder Bindemittelsystemen die Einhaltung des geforderten Temperaturbereichs eingehalten werden. Hierzu kann der Ansatzbehälter doppelwandig ausgeführt sein, wobei der dadurch zwischen den beiden Behälterwänden entstehende Hohlraum mit Kühlflüssigkeit oder Wasser durchströmt werden kann. Mit einem üblichen Heiz-/Kühlaggregat kann so ein Temperieren des Ansatzes erfolgen.

Die Mischvorrichtung sollte so ausgelegt sein, um ein regelmäßiges oder bevorzugt ein kontinuierliches Vermengen des Korrosionsschutzmittelansatzes im Ansatzbehälter zu erreichen. Geeignete Mischvorrichtungen können bspw. so ausgelegt sein, dass am Ansatzbehälter angebrachte Gasdüsen durch Anlegen eines entsprechenden Gasdrucks den Korrosionsschutzmittelansatz verwirbeln. Ebenfalls ist es denkbar, über eine Pumpe den Korrosionsschutzmittelansatz in einem geschlossenen Kreislauf aus dem Ansatzbehälter zu entnehmen und dem Ansatzbehälter wieder beizugeben (Umpumpen).

Bevorzugt ist die Mischvorrichtung eine Rührvorrichtung. Entsprechende Rührvorrichtungen weisen in der Regel einen Rührer, wie bspw. eine Dissolverscheibe oder einen Wendelrührer auf, welche über einen geeigneten Antrieb bewegbar sind. Der Antrieb kann beispielsweise ein Elektromotor sein. Insbesondere ist es bevorzugt, daß der Rührer so ausgelegt ist, daß ein Vermengen einerseits in der Ebene des Rührers, aber auch senkrecht dazu erfolgt. Mit einem derartigen Rührwerkzeug kann gerade bei der Vermengung von Korrosionsschutzmitteln mit hoher Konzentration an festen Komponenten eine gute Vermengung erreicht werden. Der Rührer sollte weiterhin bevorzugt an die Geometrie des jeweiligen Ansatzbehälters angepasst sein.

Zur weiteren Verbesserung der Vermengung des Korrosionsschutzmittelansatzes ist es ferner bevorzugt, dass der Ansatzbehälter in der Technik übliche Verwirbelungsmittel, bspw. Schikanen an der Innenseite aufweist.

In einer Weiterbildung der Erfindung sind Fördermittel zum Fördern einer festen oder flüssigen Komponente aus dem jeweiligen Vorratsbehälter in den Ansatzbehälter vorgesehen. Insbesondere in industriellen Fertigungsstraßen ist ein mindestens teilweise automatisches Mischen und Dosieren der Komponenten des Beschichtungsmittelansatzes vorteilhaft. Da ferner in der Regel innerhalb einer Rezeptur die Toleranzen für die einzelnen Komponenten relativ gering sind, lassen sich so Dosierungsfehler vermeiden. Hierbei ist es grundsätzlich bevorzugt, dass sämtliche Komponenten des Beschichtungsmittels über Fördermittel in den Ansatzbehälter zu fördern sind. Um eine verbesserte Dosierung zu ermöglichen, sollte die Förderleistung der Fördermittel bevorzugt regelbar sein.

Das jeweilige Fördermittel ist abhängig von der zu befördernden Komponente. Bei flüssigen Komponenten sind in der Regel Pumpen mit Rohr- oder Schlauchleitungen vorteilhaft. Für trockene und pastöse Komponenten des Beschichtungsmittels wird bevorzugt ein Schneckenförderer eingesetzt. Insbesondere bei der Verwendung von Metallpartikeln, wie bspw. feinstem Zinkstaub, ist eine Dosierung oftmals schwer möglich und aufgrund der durch das geringe Gewicht der Partikel sehr hohen Zerstäubungsneigung mit starker und gesundheitsschädlicher Emissionsbildung verbunden. Daher sind insbesondere hier Schneckenförderer vorteilhaft. Weiterhin wäre es ebenfalls denkbar, feste partikuläre Komponenten und insbesondere Metallpartikel wie Zinkstaub mittels Druckluft über Rohrleitungen zum Ansatzbehälter zuzuführen. Zweckmäßig kann, insbesondere für pastöse Komponenten, das Fördermittel eine Auspressvorrichtung sein.

Bevorzugt weist die Vorrichtung zum Mischen und Dosieren Steuerungsmittel zur Steuerung der Dosierung auf. Derartige Steuermittel erleichtern die sichere und genaue Dosierung deutlich. Neben der Steuerung der Dosierung ist es natürlich auch möglich, dass die Steuerungsmittel weitere Prozessparameter, wie bspw. das Mischen durch entsprechende Messung von Viskositäten überwachen und einstellen. Ebenfalls können derartige Steuermittel so ausgelegt sein, dass diese, je nach Absetzverhalten des Korrosionsschutzmittels, die Topfzeit selbständig überwachen und so in die Prozesssteuerung einer Applikations-/Beschichungsanlage integriert werden. Ebenfalls ist es denkbar, Mittel zur Überwachung des Füll-/Niveaustandes vorzusehen, um bei Unterschreiten eines bestimmten Füllstandes innerhalb der Applikations-/Beschichtungsanlage automatisch das Mischen eines neuen Korrosionsschutzmittelansatzes in der Vorrichtung zum Mischen und Dosieren zu starten. Steuerungsmittel sind in der Prozesstechnik industriell verfügbar, insbesondere geeignet sind bspw. SPS-Steuerungen oder Mikroprozessorsteuerungen.

Das Aufbringen des erfindungsgemäßen Korrosionsschutzmittels ist, wie eingangs erläutert, aufgrund der Eigenschaften des VOC-konformen Korrosionsschutzmittels bezüglich Absetzverhalten und kurzer Trockenzeit schwierig. Hierdurch können Rohrleitungen und Vorrichtungen schnell verstopfen. Aufgrund dieser besonderen Problematik bei der Verarbeitung des erfindungsgemäßen VOC-konformen Korrosionsschutzmittels wird daher im Rahmen der erfindungsgemäßen Lösung als eigenständiger Bestandteil für das Bereitstellen einer Korrosionsschutzbeschichtung eine Applikationsanordnung zum Aufbringen von Korrosionsschutzmittel auf ein Werkstück bereitgestellt. Die Applikationsanordnung weist hierzu einen Ansatzbehälter, Fördermittel, mindestens einen mit dem Ansatzbehälter verbundenen Druckminderer und eine mit dem Ansatzbehälter verbundene Sprühvorrichtung auf.

Mit einer derartigen Anordnung ist es vorteilhaft möglich, das erfindungsgemäße Korrosionsschutzmittel auf ein Werkstück aufzutragen. Der Ansatzbehälter sollte hierbei so ausgelegt sein, dass ein batchweises Verarbeiten innerhalb der Topfzeit der jeweiligen Korrosionsschutzmittelzusammensetzung möglich ist. Die Größe des Ansatzbehälters sollte daher gemäß den Anforderungen in der jeweiligen Beschichtungsanlage gewählt werden.

Es ist denkbar, denselben Ansatzbehälter innerhalb der Vorrichtung zum Mischen und Dosieren und der Applikationsanordnung zu verwenden. Der Ansatzbehälter sollte geeignete Anschlüsse zum Entnehmen des Korrosionsschutzmittels aufweisen. Hierzu weist die Applikationsanordnung geeignete Fördermittel auf, bspw. können alle üblichen Fördermittel, wie bspw. geeignete Förderpumpen hierfür eingesetzt sein. Derartige Fördermittel sollten so ausgelegt sein, dass die üblicherweise vorhandenen Leitungen zwischen Ansatzbehälter und Druckminderer/Sprühvorrichtung mit Korrosionsschutzmittel unter einem geeigneten Betriebsdruck versorgt werden können. Der Betriebsdruck sollte hierbei grundsätzlich abhängig von der jeweiligen Leitungslänge gewählt werden. Für übliche Beschichtungsanlagen hat sich ein Betriebsdruck von 1-2 Bar als geeignet gezeigt. Insbesondere sollte der Betriebsdruck deshalb nicht zu gering gewählt werden, um ein Absetzen der festen Komponenten des Korrosionsschutzmittels oder ein Zusetzen der Leitungen zu vermeiden. Bei dem Auftragen des Korrosionsschutzmittels auf ein Werkstück ist insbesondere ein HVLP-Verfahren bevorzugt. Daher ist das Einstellen eines exakten Sprühdrucks, üblicherweise zwischen 0,3 und 0,4 bar notwendig. Um den entsprechenden Sprühdruck einzustellen ist ein Druckminderer vorgesehen. Der Druckminderer sollte den durch das jeweilige Fördermittel erzeugen Betriebsdruck sicher regeln können. Bevorzugt ist der Druckminderer zwischen dem Ansatzbehälter und der damit verbundenen Sprühvorrichtung zwischengeschaltet. Beim Einsatz mehrerer Sprühpistolen in einer Applikationsanordnung sollte je Sprühvorrichtung ein Druckminderer vorhanden sein, um den Sprühdruck an jeder Sprühpistole optimal einstellen zu können. Hierbei sollte der Leitungsweg zwischen Druckminderer und Sprühpistole möglichst kurz gehalten werden. Derartige Druckminderer sind im Bereich der Fluidtechnik industriell verfügbar. Druckminderer und Sprühvorrichtung sollten so ausgestaltet sein, dass ein Zusetzen im Betrieb vermieden wird.

Bevorzugt ist der Druckminderer daher kontaktlos ausgeführt, d.h. der Druckminderer steht nicht in unmittelbarem Kontakt mit dem im Betrieb verwendeten Korrosionsschutzmittel. Eine derartige Ausgestaltung des Druckminderers ist insbesondere daher vorteilhaft, da übliche Membrandruckminderer die Eigenschaft zeigen, dass sich bei dem erfindungsgemäßen Beschichtungsmittel mit festen und flüssigen Komponenten, Teile der festen Komponenten innerhalb des Druckminderers sammeln und so zu einem frühzeitigen Zusetzen des Druckminderers führen. Insbesondere ist es daher bevorzugt, dass der Ansatzbehälter mindestens abschnittsweise mittels einer Schlauchleitung mit der Sprühpistole verbunden ist und der Druckminderer derart ausgelegt ist, dass der Querschnitt der Schlauchleitung mindestens abschnittsweise variierbar ist.

Durch eine derartige Ausgestaltung ist eine einfache Druckregulierung möglich. Der Druckminderer kann hierzu die Schlauchleitung bspw. mittels eines Pneumatikzylinders quetschen. Die Schlauchleitung sollte daher entsprechend der Ausführung des Druckminderers geeignet beschaffen sein, und insbesondere elastisch sein. Bevorzugt wird ein Schlauch verwendet, welcher einen Innendurchmesser zwischen 2 mm - 10 mm aufweisen sollte.

Besonders bevorzugt ist die Sprühvorrichtung derart ausgebildet, daß der im Betrieb erzeugte Zerstäuberluftstrom außerhalb der Sprühvorrichtung das Korrosionsschutzmittel zerstäubt. Das Korrosionsschutzmittel kommt folglich vorteilhaft erst außerhalb der Sprühvorrichtung mit dem Zerstäuberluftstrom in Kontakt. Die Sprühvorrichtung ist hierfür entsprechend ausgebildet, insbesondere kann die Düse eine einstellbare Öffnungsgröße aufweisen. Entsprechende Versuche des Anmelders zeigen, daß insbesondere eine Düsengröße zwischen 0,5 mm - 1,2 mm bei Verwendung einer "Stem-S"-Düse vorteilhaft ist. Selbstverständlich kann auch jede andere geeignete Düse eingesetzt werden.

Neben dem Zerstäuberluftstrom wird außerhalb der Sprühvorrichtung auch ein formgebender Luftstrom bereitgestellt, welcher die restliche, für das Versprühen des Korrosionsschutzmittels notwendige Luftmenge im Betrieb bereitstellt und den Sprühstrahl formt.

Die derartige Ausgestaltung der Sprühvorrichtung ist insbesondere bei dem erfindungsgemäßen Korrosionsschutzmittel vorteilhaft, da dieses bei Kontakt mit Luft zügig aushärtet. Dadurch, daß die zum Zerstäuben benötigte Luftmenge im wesentlichen erst außerhalb der Sprühvorrichtung zugesetzt ist, kann ein Zusetzen der Sprühvorrichtung in dieser Weise vorteilhaft vermieden werden.

Nach einer bevorzugten Weiterbildung weist der Ansatzbehälter, auch wenn er in der Applikationsanordnung eingesetzt ist eine Mischvorrichtung auf. Je nach Zusammensetzung des Korrosionsschutzmittels kann es vorteilhaft sein, den im Ansatzbehälter enthaltenen Korrosionsschutzmittelansatz regelmäßig zu vermengen bzw. kontinuierlich zu vermengen. Hierdurch kann gerade bei Korrosionsschutzmittelzusammensetzungen mit hohem Anteil an festen Komponenten, wie bspw. dem erfindungsgemäßen VOC-konformen Korrosionsschutzmittel, ein vorzeitiges Absetzen vorteilhaft vermieden werden. Entsprechende einsetzbare Mischvorrichtungen wurden bereits bei der Erläuterung der Vorrichtung zum Mischen und Dosieren diskutiert, worauf hier Bezug genommen wird.

Insbesondere ist es hierbei bevorzugt, dass der in der Applikationsanordnung eingesetzte Ansatzbehälter ein Druckgefäß ist und eine Vorrichtung zum kontinuierlichen Rühren des Korrosionsschutzmittels aufweist. Durch die Ausbildung des Ansatzbehälters als Druckgefäß ist es möglich, mit geeigneten Fördermitteln, bspw. einer Druckluftzufuhr, den gesamten Behälter mit dem Betriebsdruck zu beaufschlagen. Bei der Verwendung von Druckluft als Fördermittel sollte der Ansatzbehälter eine entsprechende Druckluftzufuhr aufweisen. Zum leichten Erreichen des Inneren des Ansatzbehälters, bspw. während des Misch- und Dosiervorgangs des Korrosionsschutzmittels, sollte der Ansatzbehälter einen abnehmbaren Deckel aufweisen. Die Vorrichtung zum kontinuierlichen Rühren des Korrosionsschutzmittels kann bspw. ein Wendelrührer zum Vermengen des Korrosionsschutzmittels aufweisen. Ein Antrieb kann bspw. durch einen Elektromotor gebildet sein, der bevorzugt außerhalb des Ansatzbehälters angeordnet ist. In diesem Fall muss jedoch mittels entsprechender Dichtungen für eine Druckdichtheit des Ansatzbehälters gesorgt sein.

In einer anderen Weiterbildung umfassen die Mittel zur Druckerzeugung eine Pumpe zwischen Ansatzbehälter und Sprühvorrichtung, insbesondere ist eine Doppelmembranpumpe bevorzugt. Zur Druckregulierung sollte zwischen Pumpe und Sprühvorrichtung ein Druckminderer angeordnet sein. Eine Zirkulationsleitung ist zwischen Pumpe und Druckminderer angeordnet, und bildet eine Rückflussleitung zum Ansatzbehälter. Bei derartiger Ausbildung des Applikationssystems ist es nicht notwendig, den Ansatzbehälter als Druckgefäß auszulegen. Die Pumpe zwischen Ansatzbehälter und Druckminderer sorgt für den notwendigen Betriebsdruck auf den entsprechenden Leitungen. Die Zirkulationsleitung, welche bevorzugt in der Nähe des Druckminderers und der Sprühvorrichtung angeordnet ist, verbindet die Leitung zwischen Druckminderer und Pumpe wiederum mit dem Ansatzbehälter. Hierdurch zirkuliert mindestens ein Teil des Korrosionsschutzmittels, wodurch das Korrosionsschutzmittel im Ansatzbehälter kontinuierlich vermengt wird (Umpumpen). Bevorzugt wird hierbei das Unterspiegelverfahren verwendet, bei dem die Zirkulationsleitung derart mit dem Ansatzbehälter verbunden ist, dass das rückfließende Korrosionsschutzmittel unterhalb des Spiegels des sich im Ansatzbehälter befindlichen Korrosionsschutzmittels zurückfließt.

Für die industrielle Fertigung ist es insbesondere Vorteilhaft, dass die Applikationsanordnung zum Aufbringen von Korrosionsschutz eine Vorrichtung zum Mischen und Dosieren, wie vorstehend genannt, umfasst. Die Kombination einer Vorrichtung zum Mischen und Dosieren und der Applikationsanordnung erlaubt einen Batchbetrieb durch Austausch der jeweiligen Ansatzbehälter. Hierbei ist es nicht notwendig, dass je Applikationsanordnung in einer Fertigungslinie eine Vorrichtung zum Mischen und Dosieren vorhanden ist, aus ökonomischen Gesichtspunkten kann es sinnvoll sein, eine Vorrichtung zum Mischen und Dosieren für eine Vielzahl von Applikationsanordnungen vorzusehen. Durch die Kombination der beiden Vorrichtungen ist es auch vorteilhaft möglich, je Ansatz an Korrosionsschutzmittel nur einen Ansatzbehälter zu verwenden. Das Korrosionsschutzmittel kann hierbei direkt in der Vorrichtung zum Mischen und Dosieren in dem Ansatzbehälter hergestellt werden, welcher anschließend innerhalb der Applikationsanordnung zum Aufbringen von Korrosionsschutzbeschichtungen auf Werkstücke eingesetzt wird.

Hierbei ist es unerheblich, ob die Applikationsanordnung und die Vorrichtung zum Mischen und Dosieren räumlich nah beieinander oder unter Umständen in einiger Entfernung voneinander, bspw. in unterschiedlichen Werkshallen, angeordnet sind. Es ist jedoch möglich, dass die Applikationsanordnung und die Vorrichtung zum Mischen und Dosieren über eine gemeinsame Prozesssteuerung gesteuert und kontrolliert sind. Bspw. könnte innerhalb der Applikationsanordnung eine Vorrichtung zum Messen des Füllstandes innerhalb des Ansatzbehälters angeordnet sein und bei Unterschreiten eines festgelegten Füllstandes in der Vorrichtung zum Mischen und Dosieren direkt ein neuer Ansatz Korrosionsschutzmittel in einem weiteren Ansatzbehälter hergestellt werden.

Die Erfindung wird nachstehend anhand von Ausführungsbeispielen erläutert. In den Abbildungen zeigt:
- Fig. 1: ein erstes Ausführungsbeispiel einer Vorrichtung zum Mischen und Dosieren von festen und flüssigen Komponenten eines Korrosionsschutzmittels;
- Fig. 2: eine zweite Ausführungsform der Vorrichtung zum Mischen und Dosieren;
- Fig. 3: eine erste Ausführungsform einer Applikationsanordnung zum Aufbringen von Korrosionsschutzmittel auf ein Werkstück;
- Fig. 4: eine zweite Ausführungsform der Applikationsanordnung und
- Fig. 5: eine dritte Ausführungsform der Applikationsanordnung.

### Korrosionsschutzmittel Beispiel I

Zunächst erläutern wir Details der Herstellung des Korrosionsschutzmittels für ein ausgewähltes Ausführungsbeispiel: 55 g Zinkstaub mit einem Partikel-Durchmesser von durchschnittlich 8 µm und 10 g Zinkoxid gleichen Durchmessers werden gemischt und als Komponente I trocken und frostfrei in Pulverform separat gelagert. Komponente II besteht aus 25 g eines Bindemittels aus Kaliumsilikat und Siliziumdioxid (SiO₂), wobei das Mol-Verhältnis SiO₂ zu Kaliumoxid 5:1 beträgt. Weiter sind 0,05 g eines Verdickungsmittels sowie jeweils 1 g weiterer Additive, hier z.B. Kelzan ST ®, ein Benetzungsmittel, z. B. Tego Wet 500 ® und einer 20-%igen wässrigen Lösung von Tetra-etyhlammoniumhydroxid (TEAH) als Stabilisator zugesetzt. Der zweiten Komponente werden noch 7 g demineralisierten Wassers zugesetzt. Die Bestandteile der zweiten Komponente werden 15 Minuten mit einem Rührer gemischt. Die Komponente II weist einen pH-Wert von über 11 auf. Sie ist VOC-frei. Die Komponente wird in einem üblichen Behälter verschlossen gelagert.

### Korrosionsschutzmittel Beispiel II

Eine alternative Ausführungsform des Korrosionsschutzmittels weist folgende Bestandteile auf: Komponente I: 60 g Zinkstaub, der herstellungsbedingt bis zu 3 g Zinkoxid enthält. Komponente II: 20 g des Bindemittels aus Beispiel I, 0,05 g eines Verdickungsmittels, z.B. Kelzan ST ® und jeweils 1 g eines Benetzungsmittels, z. B. Tego Wet 500 ® und einer 20-%igen wässrigen Lösung von Tetra-etyhlammoniumhydroxid (TEAH) als Stabilisator sowie 10 g einer 60 %-igen wässrigen Aluminium-Paste und 8 g demineralisiertem Wasser. Das Korrosionsschutzmittel nach Beispiel II wird hergestellt, indem zunächst die Aluminiumpaste für mindestens 30 Minuten aufgerührt wird.

Danach werden die Bestandteile der Komponente II mit einem Rührer vermischt. Die Komponente II weist einen pH-Wert von über 11 auf. Sie ist VOC-frei. Die Komponente wird in einem üblichen Behälter verschlossen gelagert.

### Ausführungsbeispiel Werkstück

Bremsscheiben aus Stahl werden mit dem Korrosionsschutzmittel gemäß Ausführungsbeispiel II beschichtet. Die Bremsscheiben wurden zuvor von Staub und Fett gereinigt. Auf die Bremsscheiben wird eine VOC-freie Lösung, die 4-% Wasserglas enthält, aufgesprüht. Die mit Primer beschichteten Bremsscheiben passieren ein Gebläse. Dadurch wird die Primer-Schicht (Schichtstärke 1µm) bei Raumtemperatur getrocknet. Auf die Primer-Schicht wird das Korrosionsschutzmittel gemäß Ausführungsbeispiel II in einer 50 µm dicken Schicht aufgesprüht. Die Beschichtung erfolgt bei Raumtemperatur. Anschließend passieren die beschichteten Bremsscheiben einen Durchlauf-Trockenofen, bei dem durch Einsatz von Seitenverdichtern eine hohe Luftgeschwindigkeit erzeugt wird, durch die das Korrosionsschutzmittel auf den Bremsscheiben in kurzer Zeit trocknet und aushärtet. Eine Trocknung bei erhöhten Temperaturen ist nicht erforderlich.

Im Salzsprühtest wird eine Standzeit die der so beschichteten Bremsscheiben von mehr als 500 Std. gemessen. Die Bremsscheiben konnten beschichtet werden, ohne daß ein Verziehen der Bremsscheiben durch Erwärmung erfolgte. Durch den Zusatz von passivierten Aluminium-Partikeln im Korrosionsschutzmittel weisen die Bremsscheiben eine ansprechende, einheitliche Farbgebung auf.

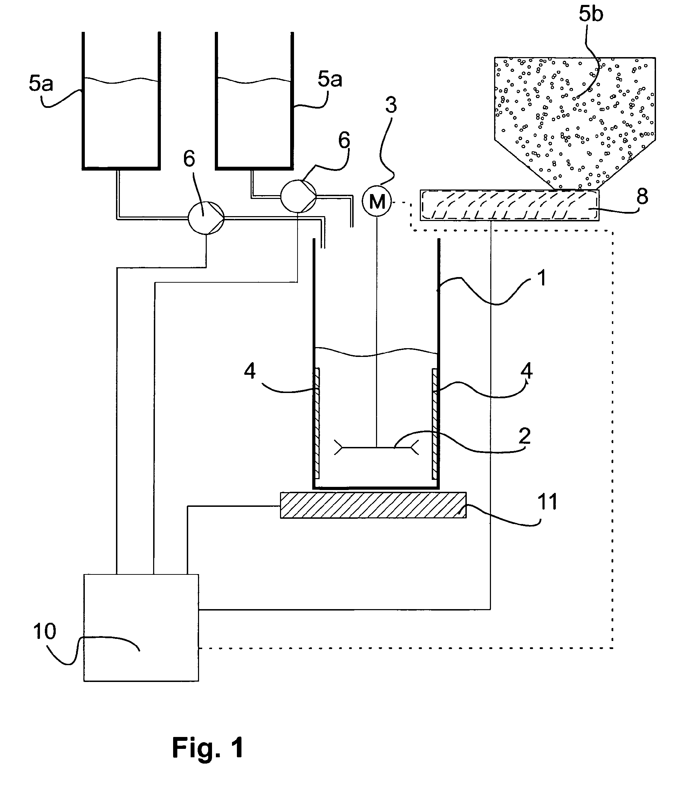

Fig. 1 zeigt eine erste Ausführungsform einer Vorrichtung zum Mischen und Dosieren von festen und flüssigen Komponenten eines Korrosionsschutzmittels. Die Vorrichtung weist einen Ansatzbehälter 1 auf, der zum Mischen der Komponenten eine Rührvorrichtung aufweist. Die Rührvorrichtung umfaßt eine Dissolverscheibe 2 und wird über eine Anordnung aus einer Achse und einem Elektromotor 3 angetrieben. Der Elektromotor 3 ist außerhalb des Ansatzbehälters 1 an diesem, bzw. am Behälterdeckel (nicht gezeigt) angebracht. Der Ansatzbehälter 1 besteht aus Stahl und weist seitliche Schikanen 4 auf, die für ein verbessertes Mischen, insbesondere senkrecht zu der Ebene der Dissolverscheibe 2, sorgen. Alternativ wäre es denkbar, anstelle der Dissolverscheibe 2 eine Dissolver-Sogscheibe zu verwenden.

Die Vorrichtung zum Mischen und Dosieren weist ferner ein oder mehrere Vorratsbehälter 5a für flüssige bis pastöse Komponenten niedriger bis mittlerer Viskosität auf. Beispielsweise wird das Lösemittel (hier: Wasser) und das Bindemittel über derartige Vorratsbehälter vorgehalten. Die Dosierung dieser Komponenten in den Ansatzbehälter 2 erfolgt über Pumpen 6. Hierbei kann es sich über handelsübliche Flügelradpumpen handeln, je nach eingesetzter Komponente können auch Doppelmembranpumpen verwendet werden. Für den Fall, dass eine pastöse Komponente mittels einer Pumpe 6 dosiert werden soll, sollte diese an die Materialeigenschaften der jeweiligen Komponente angepaßt sein. Zum Dosieren von festen Komponenten des Korrosionsschutzsmittels, wie bspw. Zinkstaub, weist die Vorrichtung zum Mischen und Dosieren mindestens einen Vorratsbehälter 5b auf, die Dosierung von festen Komponenten erfolgt über einen Schneckenförderer 8.

Zur Steuerung der Dosierung ist eine Mikroprozessoreinheit 10 vorgesehen, welche mit den Pumpen 6 und dem Schneckenförderer 8 verbunden ist. Ferner wird der Ansatzbehälter 1 über eine Präzisionswaage 11 kontinuierlich gewogen. Durch Auswertung der Meßdaten der Präzisionswaage 11 in der Mikroprozessoreinheit 10 werden unter Zugrundelegung des Korrosionsschutzmittelrezeptes die Pumpen 6 sowie der Schneckenförderer 8 getaktet gesteuert, um die entsprechenden Anteile des der Komponenten des Korrosionsschutzmittels in einem Ansatz präzise dosieren zu können. Neben der Steuerung der Dosierung ist es ebenfalls denkbar, daß die Mikroprozessoreinheit 10 auch den Elektromotor 3 steuert, wodurch unterschiedliche Rührgeschwindigkeiten oder Ruhezeiten berücksichtigt werden können. Die Verbindung der Mikroprozessoreinheit 10 mit den Geräten geschieht über übliche Steuerungsleitungen.

Während des Mischens des Korrosionsschutzmittels wird die Dissolverscheibe 2 kontinuierlich bei einer Drehzahl von 1000 U/min in Rotation gehalten. Nach Komplettierung wird eine Drehzahl von 500 U/min eingestellt.

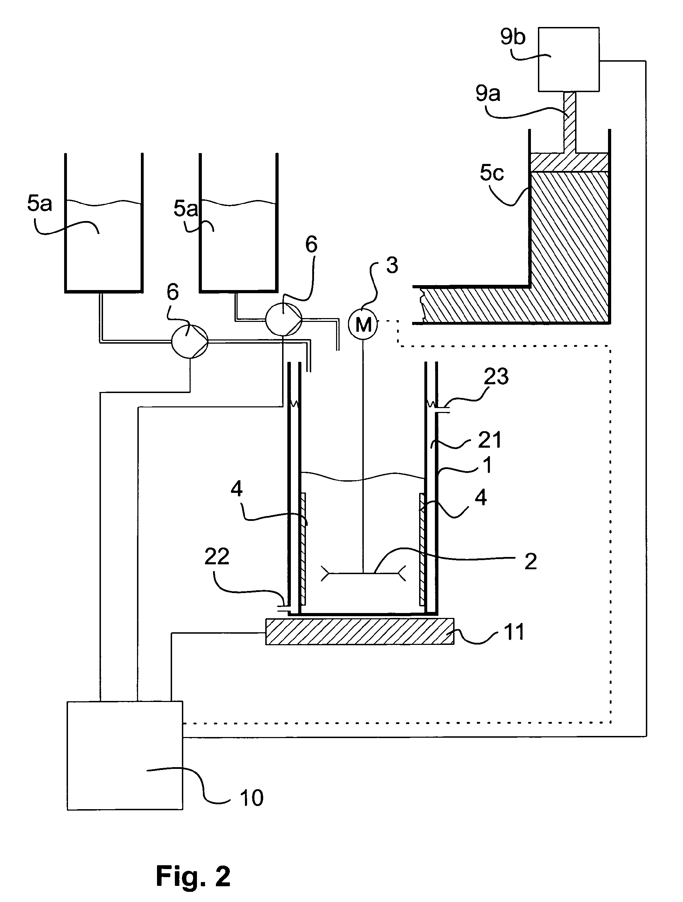

Je nach Zusammensetzung des Korrosionsschutzmittels kann es notwendig sein, den Ansatzbehälter 1 zu temperieren. Die in Fig. 2 gezeigte zweite Ausführungsform der Vorrichtung zum Mischen und Dosieren zeigt daher einen doppelwandigen Ansatzbehälter 1. Der dadurch entstehende Zwischenraum zwischen den beiden Behälterwänden 21 ist mit Kühlmittel gefüllt. Der Ansatzbehälter 1 kann so über ein Heiz-/Kühlaggregat (nicht gezeigt), welches mit dem Vorlauf 22 und dem Rücklauf 23 verbunden ist, temperiert werden. Das Heiz-/Kühlgerät sollte zur Überwachung und Steuerung ebenfalls mit der Mikroprozessoreinheit 10 verbunden sein.

Gegenüber Fig. 1 zeigt Fig. 2 des weiteren eine dritte Form eines Vorratsbehälters 5c, welcher insbesondere für pastöse Komponenten des Korrosionsschutzmittels geeignet ist. Die Dosierung der pastösen Komponente erfolgt über eine Auspressvorrichtung 9a, welche von einem Elektromotor 9b angetrieben ist. Zur Steuerung der Dosierung ist der Elektromotor 9b mit der Mikroprozessoreinheit 10 verbunden.

Die in den Fig. 1 und 2 gezeigten Ausführungsbeispiele sind jedoch nur exemplarisch zu verstehen. Es ist durchaus möglich, daß bspw. die in Fig. 2 gezeigte Auspressvorrichtung 9a in dem Ausführungsbeispiel von Fig. 1 zusätzlich, bspw. zum Dosieren von pastösem Aluminium verwendet wird. Ebenso ist es möglich, daß mehrere Vorratsbehälter 5b mit entsprechenden Schneckenförderern 8 für ein Korrosionsschutzmittel mit mehreren festen Komponenten eingesetzt werden. Grundsätzlich sollten die entsprechenden Vorratsbehälter und Dosierungsmittel entsprechend der Zusammensetzung des Korrosionsschutzmittels angepaßt gewählt werden.

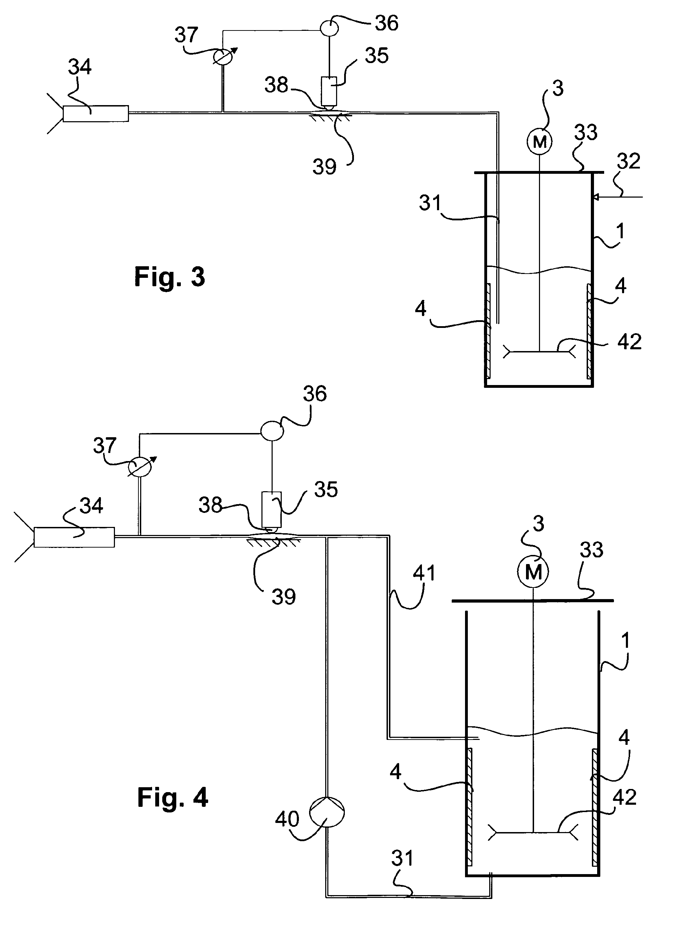

Ein erstes Ausführungsbeispiel einer Applikationsanordnung zum Aufbringen des Korrosionsschutzmittels auf ein Werkstück ist in Fig. 3 gezeigt. Die Applikationsanordnung weist den bereits zuvor erläuterten Ansatzbehälter 1 auf. Dieser wird zunächst innerhalb der zuvor erläuterten Vorrichtung zum Mischen und Dosieren genutzt. Nach Fertigstellung des Korrosionsschutzmittelansatzes wird derselbe Ansatzbehälter 1 innerhalb der Applikationsanordnung verwendet. Die Verwendung desselben Ansatzbehälters 1 ist insbesondere für einen quasi kontinuierlichen Betrieb im industriellen Fertigungsprozeß von Vorteil. Der Austausch des Ansatzbehälters 1 zwischen den beiden Anlagen kann manuell, aber auch automatisch geschehen.

Damit der Korrosionsschutzmittelansatz keine Absatzerscheinungen zeigt, wird der Ansatz kontinuierlich mit einer geeigneten Rührvorrichtung, bspw. einem Wendelrührer 42 vermischt. Ein Deckel 33 schließt den Ansatzbehälter druckdicht ab. Die Achsendurchführung zwischen Elektromotor 3 und Dissolverscheibe 2 ist entsprechend druckdicht ausgeführt. Ein Druckanschluß 32 ist zum Beaufschlagen des Ansatzbehälters 1 mit Druckluft vorgesehen. Unter Anlegen von Druckluft an den Druckanschluß 32 wird das Korrosionsschutzmittel aus dem Ansatzbehälter 1 über ein Förderrohr 31 ausgedrückt. Das Förderrohr 31 verbindet den Ansatzbehälter 1 mit einer Spritzpistole 34. Obwohl nicht gezeigt, kann zwischen Ansatzbehälter 1 und Sprühpistole 34 ein geeignetes Filter eingesetzt werden. Zum Regeln des Sprühdrucks ist zwischen Ansatzbehälter 1 und Sprühpistole 34 ein Druckminderer 35 angeordnet.

Der Druckminderer wird von einem Regler 36 gesteuert, der mit einem Druckmeßgerät 37 verbunden ist. Der Regler 36 erlaubt die Einstellung des jeweiligen Sprühdrucks und regelt den Druck an der Sprühpistole 34 über den Druckminderer 35 anhand des Druckmeßgerätes 37.

Der Druckminderer 35 umfaßt einen an seiner Längsseite verschiebbaren Druckkolben 38, welcher je nach Stellung den Querschnitt einer Schlauchleitung 39 verändert. Der Druckminderer 35 umfaßt hierzu einen geeigneten Stellmotor (nicht gezeigt). Die Schlauchleitung 39 weist einen Innendurchmesser von 4 mm auf.

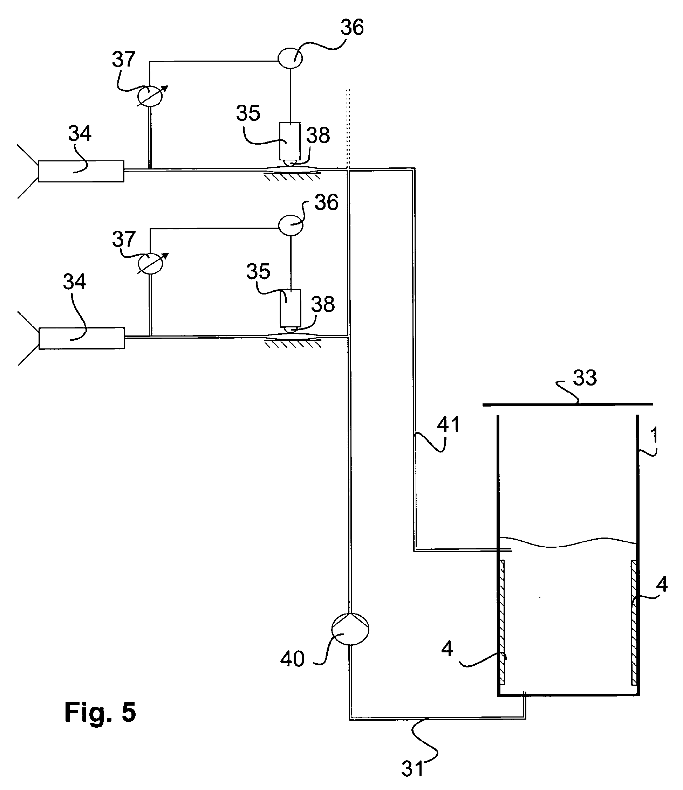

In Fig. 4 ist eine zweite Ausführungsform der Applikationsanordnung gezeigt. Die in Fig. 4 gezeigte Applikationsanordnung unterscheidet sich von der in Fig. 3 gezeigten dadurch, daß zur Förderung des Korrosionsschutzmittels aus dem Ansatzbehälter 1 über die Förderleitung 31 eine Pumpe 40 benutzt wird. Die Pumpe 40 ist als Doppelmembranpumpe ausgeführt und fördert angesaugtes Korrosionsschutzmittel zur Sprühpistole 34 über geeignete Leitungen. Durch diese Art der Förderung des Korrosionsschutzmittels ist es nicht notwendig, den Ansatzbehälter 1 und den Deckel 33 druckfest auszuführen. Damit die Pumpe 40 kontinuierlich betrieben werden kann, auch wenn die Sprühpistole 34 nicht aktiv ist, ist eine Rückleitung 41 vorgesehen, über die überschüssiges Korrosionsschutzmittel zurück in den Ansatzbehälter 1 gelangt. Um eine Blasenbildung zu vermeiden, ist die Rückleitung 41 unterhalb des Spiegels des Korrosionsschutzmittels im Ansatzbehälter 1 zurückgeführt (Unterspiegelverfahren). Auf diese Art und Weise läßt sich auch eine Verwirbelung des Korrosionsschutzmittels im Ansatzbehälter 1 erreichen, so daß, je nach Beschaffenheit des Korrosionsschutzmittels, die Rührvorrichtung entfallen kann. Eine derartige Ausführungsform der Applikationsanordnung ist in Fig. 5 gezeigt.

Die in Fig. 5 gezeigte dritte Ausführungsform einer Applikationsanordnung verfügt ebenfalls über eine mit der Förderleitung 31 verbundene Pumpe 40 sowie über eine Rückleitung 41, mit der überschüssiges Korrosionsschutzmittel in den Ansatzbehälter 1 zurückgeführt wird. Wie gezeigt, sind zwei Sprühpistolen 34 in der Applikationsanordnung vorhanden. Je Sprühpistole 34 ist eine Anordnung aus Druckminderer 35, Regler 36 und Druckmeßgerät 37 vorhanden, um den Sprühdruck an der jeweiligen Sprühpistole 34 einstellen zu können. Es ist ohne weiteres möglich, weitere Sprühpistolen 34, wie gezeigt, anzuordnen. Die Pumpe 40 sollte dann entsprechend gewählt werden, um einen ausreichenden Druck zur Verfügung zu stellen. Die Verwendung von mehreren Sprühpistolen 34 ist insbesondere in industriellen Fertigungsstraßen von Vorteil, um eine Beschichtung eines Werkstücks aus unterschiedlichen Richtungen zu ermöglichen, wodurch eine gleichmäßige Beschichtung sichergestellt werden kann. Bei der Verwendung von mehreren Sprühpistolen 34 ist es natürlich ebenfalls möglich, den in Fig. 3 gezeigten Aufbau einer Applikationsanordnung anzuwenden, bei der die Förderung des Korrosionsschutzmittels aus dem Ansatzbehälter 1 mittels Druckluft erfolgt.

## Patentansprüche

1. Verfahren zum Herstellen eines Beschichtungsmittels mit mindestens einer festen und mindestens einer flüssigen Komponente, wobei
- eine Teilmenge der mindestens einen flüssigen Komponente in einen Ansatzbehälter vorgelegt wird,
- die mindestens eine feste Komponente zugegeben wird,
- eine Homogenisierungsphase durchgeführt wird und
- anschließend die Restmenge der mindestens einen flüssigen Komponente zugegeben wird.

2. Verfahren zum Herstellen eines Beschichtungsmittels nach Anspruch 1, **dadurch gekennzeichnet, daß** das Abmessen und/oder das Mischen der festen und flüssigen Komponenten automatisch gesteuert wird.

3. Verfahren zum Herstellen eines Beschichtungsmittels nach einem der vorangehenden Ansprüche, **dadurch gekennzeichnet, daß** die Teilmenge ca. 1/3 der Gesamtmenge der flüssigen Komponenten beträgt.

4. Verfahren zum Herstellen eines Beschichtungsmittels nach mindestens einem der vorangehenden Ansprüche, **dadurch gekennzeichnet, daß** während des Zugebens der festen Komponenten und/oder während der Homogenisierungsphase der Ansatz regelmäßig vermengt, bevorzugt verrührt wird.

5. Verfahren zum Herstellen eines Beschichtungsmittels nach mindestens einem der vorangehenden Ansprüche, **dadurch gekennzeichnet, daß** beim Verrühren eine Drehzahl zwischen 100 - 1500 U/min eingestellt wird.

6. Verfahren zum Herstellen eines Beschichtungsmittels nach mindestens einem der vorangehenden Ansprüche, **dadurch gekennzeichnet, daß** die Temperatur des Ansatzes zwischen 4°C - 40°C gehalten wird.

7. Verfahren zum Herstellen eines Beschichtungsmittels nach mindestens einem der vorangehenden Ansprüche, **dadurch gekennzeichnet, daß** der Behälter mit einem Über- oder einem Unterdruck beaufschlagt ist.

8. Verfahren zum Herstellen eines Beschichtungsmittels nach mindestens einem der vorangehenden Ansprüche, **dadurch gekennzeichnet, daß** mit oder nach Zugabe der Restmenge der mindestens einen flüssigen Komponente weitere feste und/oder flüssige Komponenten zugegeben werden.

9. Vorrichtung zum Mischen und Dosieren von festen und flüssigen Komponenten eines Korrosionsschutzmittels mit
- Mitteln zum Abmessen der Mengen der jeweiligen Komponente des Korrosionsschutzmittels,
- einem Ansatzbehälter sowie
- einer Mischvorrichtung.

10. Vorrichtung zum Mischen nach Anspruch 9, **dadurch gekennzeichnet, daß** die Mischvorrichtung eine Rührvorrichtung ist.

11. Vorrichtung zum Mischen nach mindestens einem der Ansprüche 9-10, **dadurch gekennzeichnet, daß** der Ansatzbehälter ein Druckgefäß ist.

12. Vorrichtung zum Mischen nach mindestens einem der Ansprüche 9-11, **dadurch gekennzeichnet, daß** Mittel zum Konstanthalten der Behältertemperatur vorgesehen sind.

13. Vorrichtung zum Mischen nach mindestens einem der Ansprüche 9-12, **dadurch gekennzeichnet, daß** Fördermittel zum Fördern einer festen oder flüssigen Komponente aus mindestens einem Vorratsbehälter in den Ansatzbehälter vorgesehen sind.

14. Vorrichtung zum Mischen nach Anspruch 13, **dadurch gekennzeichnet, daß** das Fördermittel ein Schneckenförderer ist.

15. Vorrichtung zum Mischen nach mindestens einem der Ansprüche 13-14, **dadurch gekennzeichnet, daß** das Fördermittel eine Auspressvorrichtung ist.

16. Vorrichtung zum Mischen nach mindestens einem der Ansprüche 9-15, **dadurch gekennzeichnet, daß** Steuerungsmittel zur Steuerung der Dosierung vorhanden sind.

17. Applikationsanordnung zum Aufbringen von Korrosionsschutzmittel auf ein Werkstück mit
- einem Ansatzbehälter,
- Fördermittel,
- mindestens einem mit dem Ansatzbehälter verbundenen Druckminderer und
- mindestens einer mit dem Ansatzbehälter verbundenen Sprühvorrichtung.

18. Applikationsanordnung zum Aufbringen von Korrosionsschutzmittel nach Anspruch 17, **dadurch gekennzeichnet, daß** der Druckminderer kontaktlos ist.

19. Applikationsanordnung zum Aufbringen von Korrosionsschutzmittel nach mindestens einem der Ansprüche 17-18, **dadurch gekennzeichnet, daß** der Ansatzbehälter mindestens abschnittsweise mittels einer Schlauchleitung mit der Sprühvorrichtung verbunden ist und der Druckminderer derart ausgelegt ist, daß der Querschnitt der Schlauchleitung mindestens abschnittsweise variierbar ist.

20. Applikationsanordnung zum Aufbringen von Korrosionsschutzmittel nach mindestens einem der Ansprüche 17-19, **dadurch gekennzeichnet, daß** die Sprühvorrichtung derart ausgebildet ist, daß der im Betrieb erzeugte Zerstäuberluftstrom außerhalb der Sprühvorrichtung das Korrosionsschutzmittel zerstäubt.

21. Applikationsanordnung zum Aufbringen von Korrosionsschutzmittel nach mindestens einem der Ansprüche 17-20, **dadurch gekennzeichnet, daß** der Ansatzbehälter eine Mischvorrichtung aufweist.

22. Applikationsanordnung zum Aufbringen von Korrosionsschutzmittel nach mindestens einem der Ansprüche 17-21, **dadurch gekennzeichnet, daß** der Ansatzbehälter ein Druckgefäß ist und eine Vorrichtung zum kontinuierlichen Rühren des Korrosionsschutzmittels aufweist.

23. Applikationsanordnung zum Aufbringen von Korrosionsschutzmittel nach mindestens einem der Ansprüche 17-22, **dadurch gekennzeichnet, daß**
- die Mittel zur Druckerzeugung eine Pumpe zwischen Ansatzbehälter und Sprühvorrichtung aufweisen, insbesondere eine Doppelmembranpumpe, und
- eine Zirkulationsleitung zwischen Pumpe und Sprühvorrichtung angeordnet ist.

24. Applikationsanordnung zum Aufbringen von Korrosionsschutzmittel nach mindestens einem der Ansprüche 17-23, **dadurch gekennzeichnet, daß** eine Vorrichtung zum Mischen und Dosieren nach den Ansprüchen 9-16 umfaßt ist.
